# EUROPEAN PATENT SPECIFICATION

(11) **EP 3 011 194 B1**
(45) Date of publication and mention of the grant of the patent: **25.08.2021**
(21) Application number: 14814293.8
(22) Date of filing: 30.05.2014
(51) Int. Cl.: F16C 27/04, F02C 7/06, F01D 25/16, F16C 19/52

(54) **NONLINEAR ROLLING BEARING RADIAL SUPPORT STIFFNESS**
RADIALE STÜTZSTEIFIGKEIT FÜR NICHTLINEARES WÄLZLAGER
RIGIDITÉ DE SUPPORT RADIAL DE PALIER À ROULEMENT NON LINÉAIRE

(30) Priority: 21.06.2013 US 201361837847 P
(43) Date of publication of application: 27.04.2016
(73) Proprietor: Raytheon Technologies Corporation, Farmington, CT 06032 (US)
(72) Inventor: DUONG, Loc, Quang, San Diego, CA 92127 (US); HU, Xiaolan, San Diego, CA 92130 (US); HAGSHENAS, Behzad, San Diego, CA 92127 (US)
(74) Representative: Dehns
(86) International application number: PCT/US2014/040186
(87) International publication number: WO 2014/204633

(56) References cited:
- EP-A1- 1 650 449
- EP-A2- 0 134 749
- GB-A- 1 284 602
- US-A- 3 994 541
- US-A- 4 084 861
- US-A- 4 440 456
- US-A- 4 981 415
- US-A- 4 981 415
- US-A- 5 044 789
- US-A1- 2002 136 473
- US-A1- 2006 083 449
- US-A1- 2009 110 543
- US-A1- 2010 037 462
- US-A1- 2013 108 202
- US-B1- 6 325 546
- US-B2- 7 857 519

## Description

### RELATED APPLICATIONS

This application claims the benefit of and priority to U.S. Provisional Patent Application No. 61/837,847 filed June 21, 2013.

### BACKGROUND OF THE INVENTION

### 1. Field of the Invention

The present invention relates to bearing support assemblies, and more particularly to bearing support assemblies with radial spring and damping elements.

### 2. Description of Related Art

A variety of bearings are known for use in supporting rotating components. For example, in gas turbine engines, the spools are supported by bearings for rotation of rotor blades in the compressor and turbine. Over the wide range of operational speed of a gas turbine engine, or other systems with wide ranges of operational speed, it can be beneficial to include mechanical equivalent spring stiffness to the bearing supports to optimize the rotor critical speed system and also to include damping to the spring to reduce rotor radial excursion as it passes through these critical speeds. For example, during startup of a gas turbine engine, the shaft and bearings may pass through two or more critical rotor natural frequencies (called critical speeds). If one or more of these critical speeds presents in the operational speed range, it could damage the engine. Radial springs can be provided to tune these interfered critical speeds outside of the operational speed range. The damper element is added to the spring to soften and/or dampen the effects of resonance to allow the engine to pass through these critical frequencies without damage.

US 4084861 and EP 0134749 A2 provide known bearing arrangements for gas turbine engines.

### SUMMARY OF THE INVENTION

An embodiment includes a squirrel cage defining a longitudinal axis and having a cylindrical portion defining a bearing seat. The squirrel cage is configured and adapted to provide a first level of radial support stiffness between a housing and a bearing seated in the bearing seat. A damper sleeve is operatively coupled to the cylindrical portion of the squirrel cage, e.g., through a fluid film, to dampen relative radial motion between the damper sleeve and the squirrel cage, and hence that of the rotor. A radial spring component is operatively connected to a side of the damper sleeve radially opposite the cylindrical portion of the squirrel cage to provide a second level of radial support stiffness, in which the squirrel cage and the radial spring component form a spring system in parallel whose equivalent radial stiffness is the sum of the two individual stiffnesses.

To prevent damper fluid leakage, seals can be provided at the two ends of the squeeze film damper land. The squirrel cage can be mounted to a housing with the damper sleeve and radial spring component radially between the housing and the cylindrical portion of the squirrel cage. For example, the squirrel cage can be radially inside the damper sleeve, and the radial spring component can be radially outside the damper sleeve. The radial spring component can be positioned radially between the damper sleeve and the housing to radially bias the damper sleeve apart from the housing to provide the second level of radial support stiffness.

In certain embodiments, the radial spring component is an annular wave spring with a plurality of radially outer lands for pressing outward, e.g., against the housing, and a plurality of radially inner lands for pressing inward, e.g., against the damper sleeve. The inner lands alternate circumferentially with the outer lands. It is contemplated that the squirrel cage can have a spring constant lower than that of the radial spring component for applying the first level of radial stiffness support before the second level of radial stiffness support. The radial spring component can be a wave spring that is a complete wave ring, a split wave ring, a circumferentially segmented wave ring, or any other suitable configuration.

In accordance with certain embodiments, an axially spaced apart pair of seal rings seal a damper fluid chamber defined between the squirrel cage and the damper sleeve. The damper sleeve can include a recessed channel that forms part of the damper fluid chamber, to provide damper fluid storage. To prevent the squirrel cage and damper sleeve from bottoming out or from metal to metal contact, in which the oil film thickness is zero, the squirrel cage outer land, e.g., the cylindrical portion of the squirrel cage, includes two bumpers or steps at two respective ends thereof on the outside of the seal rings. The height of the bumpers is equal to the minimum fluid film radial clearance.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:
Fig. 1 is a perspective view of an embodiment of a bearing support assembly, showing the inlet housing and a squirrel cage for supporting a bearing of a rotary shaft;
Fig. 2 is a perspective view of the squirrel cage of Fig. 1, showing the squirrel cage beams for providing a first level of spring stiffness to the support structure, according to an embodiment;
Fig. 3 is a cross-sectional side elevation view of the squirrel cage of Fig. 1, showing the radial wave spring between the housing and the damper sleeve, according to an embodiment;
Fig. 4 is a perspective view of the radial wave spring of Fig. 3, showing the inner and outer lands for radial spring support, according to an embodiment;
Fig. 5 is a cross-sectional end elevation view of a portion of the radial wave spring of Fig. 3, showing geometric parameters for configuring the wave spring, according to an embodiment; and
Fig. 6 is a schematic representation of the bearing support assembly of Fig. 3, illustrating the spring stiffness of the squirrel cage and radial wave spring schematically, according to an embodiment.

### DETAILED DESCRIPTION OF THE PREFERRED EMBODIMENTS

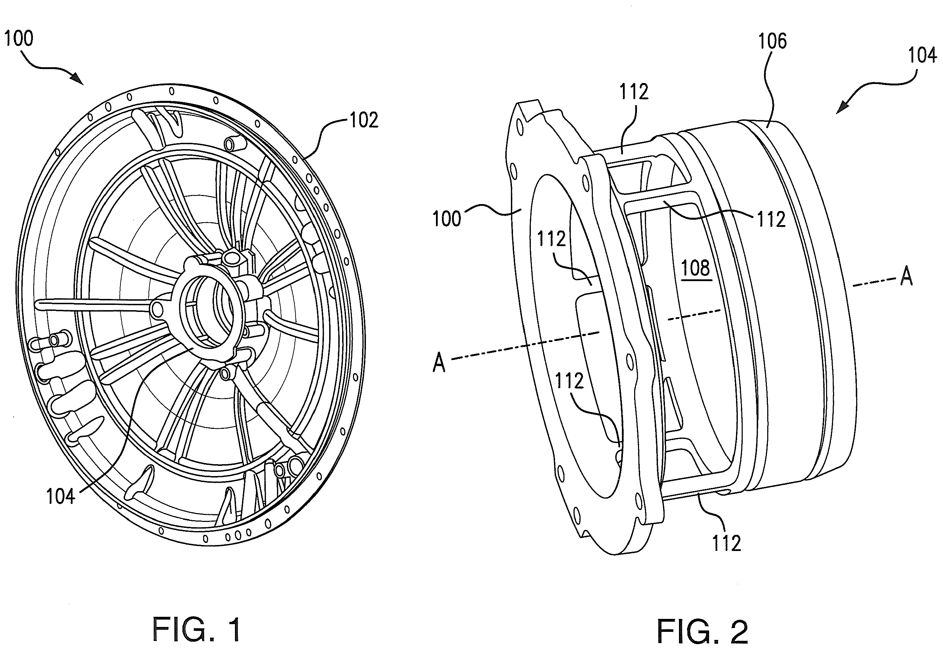

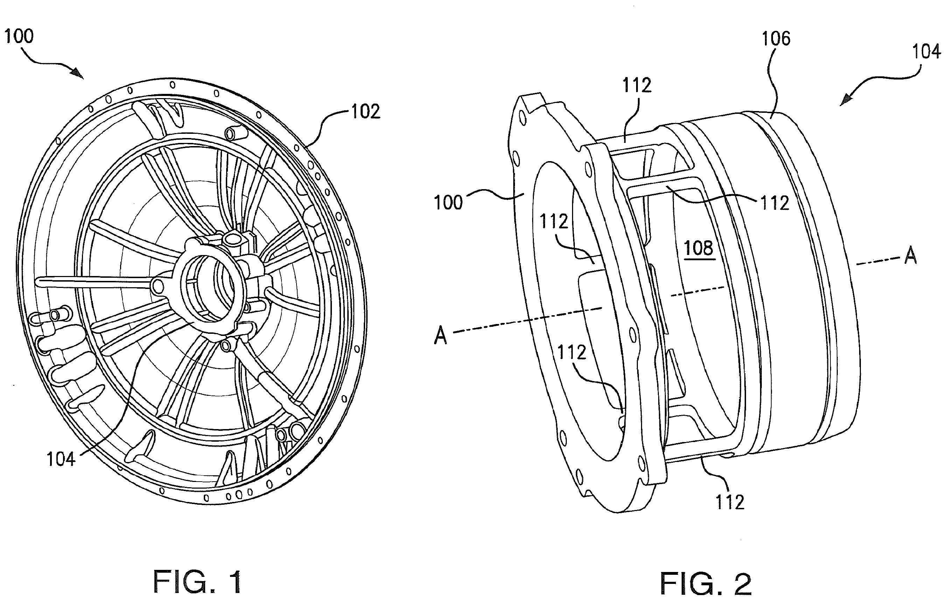

Reference will now be made to the drawings wherein like reference numerals identify similar structural features or aspects of the subject disclosure. For purposes of explanation and illustration, and not limitation, a partial view of an exemplary embodiment of a bearing support assembly in accordance with the disclosure is shown in Fig. 1 and is designated generally by reference character 100. Other embodiments of support structures in accordance with the disclosure, or aspects thereof, are provided in Figs. 2-6, as will be described. The systems and methods of this disclosure can be used to provide nonlinear stiffness to rolling bearing supports, for example to improve performance in gas turbine engines by providing an appropriate level of bearing support stiffness for different operational conditions such as warm startup, in which the engine is subjected to heat soak-back resulting in excessive rotor thermal bow and casing asymmetric deflection, as well as for cold engine start-up and steady state operation.

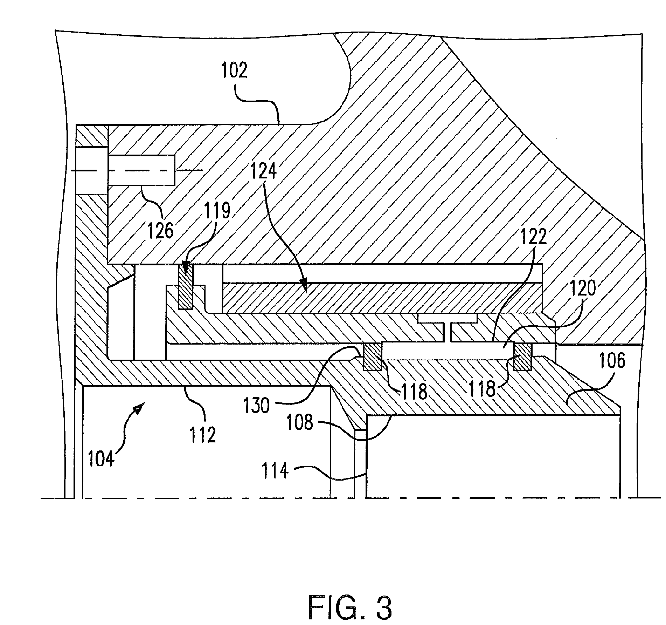

Bearing support assembly 100 includes a housing 102 and a squirrel cage 104 mounted to housing 102. As shown in Fig. 2, squirrel cage 104 defines a longitudinal axis A and includes a cylindrical portion 106 that defines a bearing seat 108 therein. Squirrel cage 104 also includes a bolting flange 110 connected to cylindrical portion 106 by cage beams 112. Cage beams 112 are relatively flexible and therefore allow for squirrel cage 104 to act as a spring between housing 104 and bearing 114, which is schematically shown seated in bearing seat 108 in Fig. 3. The spring characteristic of cage beams 112 mean that squirrel cage 104 is configured and adapted to provide a first level of radial support stiffness between housing 102 and bearing 114.

Referring now to Fig. 3, a damper sleeve 116 is operatively coupled to the cylindrical portion 106 of squirrel cage 104, via a fluid film. The fluid is squeezed to dampen relative radial motion between damper sleeve 116 and squirrel cage 104. An axially spaced apart pair of seal rings 118 seal a damper fluid chamber 120 defined between squirrel cage 104 and damper sleeve 116. Seal rings 118 prevent leakage of damper fluid to the two ends of the squeeze film damper, e.g., chamber 120. Damper sleeve 116 includes a recessed channel 122 that forms part of damper fluid chamber 120. The squeeze film thickness is represented by the vertical span of fluid chamber 120 as oriented in Fig. 3. A small bumper or step 130 on squirrel cage 104 adjacent to seal rings 118 allows for a minimum oil film even when seal rings 118 are fully compressed, for example when squirrel cage 104 comes into metal to metal contact with damper sleeve 116. Thus, bumper or step 130 prevents squeeze film damper bottom out in the adverse conditions of excessive rotor excursion such as during engine warm restart. Seal ring 119 is used to prevent damper fluid leakage from the cavity containing wave spring 124.

Squirrel cage 104 is mounted to housing 102, e.g., by bolts 126, with damper sleeve 116 and a radial spring component, namely wave spring 124, radially between housing 102 and cylindrical portion 106 of squirrel cage 104. Wave spring 124 is operatively connected the side of damper sleeve 116 radially opposite cylindrical portion 106 of squirrel cage 104 to provide a second level of radial support stiffness. In the exemplary embodiment shown, squirrel cage 104 is radially inside damper sleeve 116, and wave spring 124 is radially outside damper sleeve 116. With wave spring 124 positioned radially between damper sleeve 116 and housing 102, wave spring 124 can radially bias damper sleeve 116 apart from housing 102 to provide the second level of radial support stiffness beyond the first level of radial support stiffness provided by squirrel cage 104.

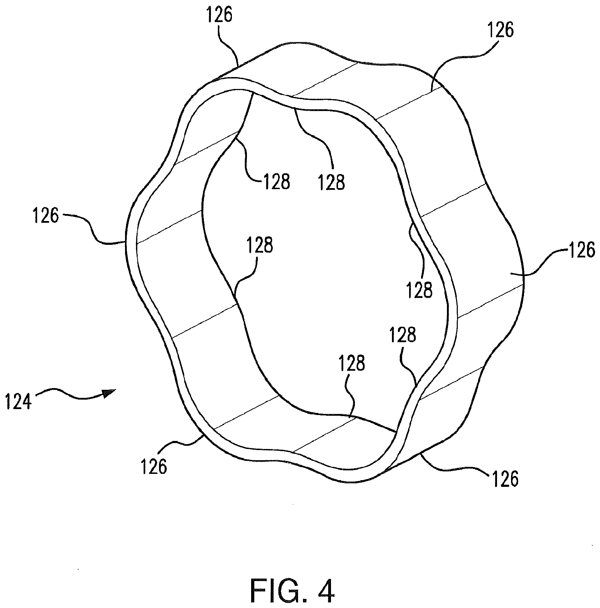

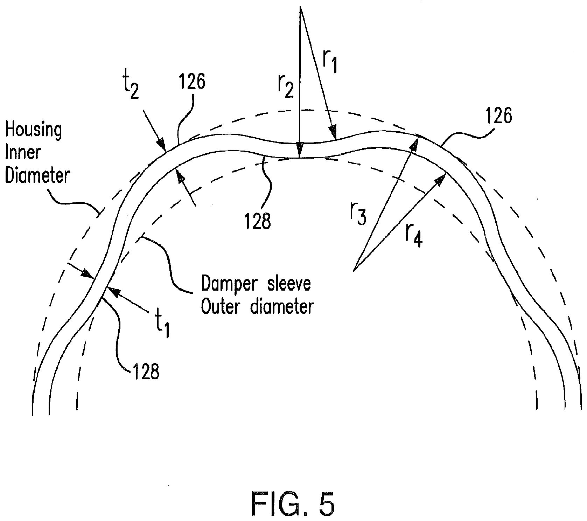

Referring now to Fig. 4, wave spring 124 is an annular wave spring with a plurality of radially outer lands 126 for pressing outward, e.g., against housing 102, and a plurality of radially inner lands 128 for pressing inward, e.g., against damper sleeve 116. Inner lands 128 alternate circumferentially with outer lands 126 around the circumference of wave spring 124. Fig. 5 shows wave spring 114 with the inner diameter of housing 102 and the outer diameter of damper sleeve 116 indicated schematically to show how the waves of wave spring 124 provide spring resilience therebetween. The specific geometry of wave spring 124 is exemplary only. Various geometric parameters can be varied as needed to be suitable for specific applications. For example, the number of waves can be varied, as can the inner and outer radii r₁ and r₂ of the inner lands 128, the outer and inner radii r₃ and r₄ of outer lands 126, the thickness t₁ of inner lands 128, and the thickness t₂ of outer lands 126, to provide suitable spring performance tailored for specific applications. The axial length of wave spring 124 can also be varied, affecting spring performance as suitable for specific applications.

Squirrel cage 104 has a spring constant lower than that of wave spring 124 for applying the first level of radial stiffness support before the second level of radial stiffness support. This provides nonlinear stiffness that can be tailored to specific applications to provide adequate support under changing conditions. For example, in an embodiment where bearing support assembly 100 is used to support a rotor bearing in a gas turbine engine, squirrel cage 104 provides a first level of bearing support stiffness that is relatively soft for accommodating critical speed conditions where vibrations occur as the rotor accelerates and decelerates. The second level of stiffness is provided by wave spring 124 when squirrel cage 104 bottoms out against damper sleeve 116, for example during significant radial excursions of the rotor shaft such as during a warm start up where uneven heating bows the rotor shaft together with housing deflections. The second level of stiffness provides some cushioning to prevent the rotor from rubbing until equilibrium conditions prevail and the squirrel cage can resume providing the first level of stiffness. In the second level of bearing support stiffness the squirrel cage spring and wave spring 124 form a parallel spring system in which the overall bearing support stiffness is the sum of the two individual spring stiffnesses. This stiffness is provided under certain adverse conditions of high rotor excursions. Without the contribution of wave spring 124, the squirrel cage would be pressed against the damper sleeve. Having the spring action of squirrel cage 104 and wave spring 124 decoupled/disengaged allows the squirrel cage to provide relatively soft support for normal operation, so the desirable rotordynamic characteristics are not perturbed during normal operation.

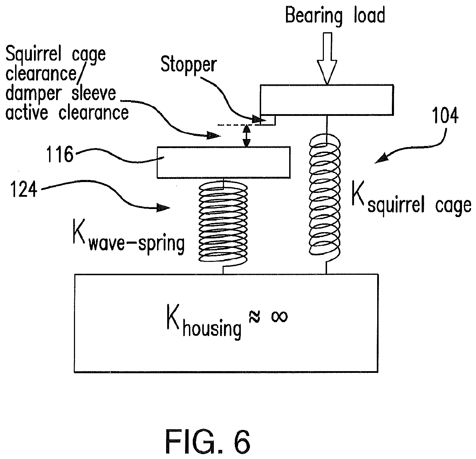

The single and parallel aspects of the stiffness levels provided by squirrel cage 104 and wave spring 124 are illustrated schematically in Fig. 6. The stopper indicated in Fig. 6 represents the cylindrical portion of squirrel cage 104 that bottoms out on damper sleeve 116 in certain conditions. In such circumstances, the spring constant of squirrel cage 104 is supplemented by the spring constant of wave spring 124, as indicated schematically by the coil springs in Fig. 6. As the equilibrium conditions begin to prevail in the example above, the squirrel cage disengages from damper sleeve 116 and the parallel spring mode of the two springs is disengaged.

Those skilled in the art will readily appreciate that while described and shown in the exemplary context of wave spring 124 being a full or complete ring, the ring can be split or incomplete, i.e. with an axial slot, and can even be separated into multiple circumferential ring segments as needed for specific applications.

The methods and systems of the present disclosure, as described above and shown in the drawings, provide for bearing support with superior properties including nonlinear support stiffness for providing appropriate levels of stiffness as needed.

## Claims

1. A bearing support assembly (100) comprising:
a squirrel cage (104) defining a longitudinal axis (A) and including a cylindrical portion (106) defining a bearing seat (108), wherein the squirrel cage is configured to provide a first level of radial support stiffness between a housing and a bearing (114) seated in the bearing seat;
a damper sleeve (116) operatively coupled to the cylindrical portion of the squirrel cage through a fluid film to dampen relative radial motion between the damper sleeve and the squirrel cage; and
a radial spring component (124) operatively connected to a side of the damper sleeve radially opposite the cylindrical portion of the squirrel cage to provide a second level of radial support stiffness.

2. A bearing support assembly as recited in claim 1, further comprising a housing (102), wherein the squirrel cage is mounted to the housing with the damper sleeve and radial spring component radially between the housing and the cylindrical portion of the squirrel cage, with the radial spring component positioned radially between the damper sleeve and the housing to radially bias the damper sleeve apart from the housing to provide the second level of radial support stiffness.

3. A bearing support assembly as recited in claim 1, further comprising an axially spaced apart pair of seal rings (118) sealing a damper fluid chamber (120) defined between the squirrel cage and the damper sleeve.

4. A bearing support assembly as recited in claim 3, wherein the damper sleeve includes a recessed channel (122) that forms part of the damper fluid chamber configured to provide fluid storage within the damper fluid chamber.

5. A bearing support assembly as recited in claim 4, wherein the squirrel cage defines a step (130) adjacent to each seal ring to ensure a minimum oil film thickness in adverse conditions in which the squirrel cage and the damper sleeve come into contact.

6. A bearing support assembly as recited in claim 1, wherein the radial spring component is an annular wave spring with a plurality of radially outer lands (126) for pressing outward, and a plurality of radially inner lands (128) for pressing inward, wherein the inner lands alternate circumferentially with the outer lands.

7. A bearing support assembly as recited in claim 1, wherein the squirrel cage has a spring constant lower than that of the radial spring component for applying the first level of radial stiffness support before the second level of radial stiffness support.

8. A bearing support assembly as recited in claim 1, wherein the radial spring component is a wave spring and the wave spring is one of: a complete wave ring, a split wave ring, and a circumferentially segmented wave ring.

9. A bearing support assembly as recited in claim 1, comprising: a housing (102) and a bearing (114) seated in the bearing seat of the squirrel cage.

## Patentansprüche

1. Lagerstützanordnung (100), umfassend:
einen Kurzschlusskäfig (104), der eine Längsachse (A) definiert und einen zylindrischen Abschnitt (106) beinhaltet, der einen Lagersitz (108) definiert, wobei der Kurzschlusskäfig dazu konfiguriert ist, ein erstes Niveau radialer Stützsteifigkeit zwischen einer Einhausung und einem Lager (114), das in dem Lagersitz sitzt, bereitzustellen;
eine Dämpferhülse (116), die mit dem zylindrischen Abschnitt des Kurzschlusskäfigs durch einen Fluidfilm hindurch betriebsfähig gekoppelt ist, um eine relative Radialbewegung zwischen der Dämpferhülse und dem Kurzschlusskäfig zu dämpfen; und
eine radiale Federkomponente (124), die mit einer Seite der Dämpferhülse radial gegenüber dem zylindrischen Abschnitt des Kurzschlusskäfigs betriebsfähig verbunden ist, um ein zweites Niveau radialer Stützsteifigkeit bereitzustellen.

2. Lagerstützanordnung nach Anspruch 1, ferner umfassend eine Einhausung (102), wobei der Kurzschlusskäfig an die Einhausung montiert ist, wobei die Dämpferhülse und eine radiale Federkomponente radial zwischen der Einhausung und dem zylindrischen Abschnitt des Kurzschlusskäfigs liegen, wobei die radiale Federkomponente radial zwischen der Dämpferhülse und der Einhausung positioniert ist, um die Dämpferhülse neben der Einhausung radial vorzuspannen, um das zweite Niveau radialer Stützsteifigkeit bereitzustellen.

3. Lagerstützanordnung nach Anspruch 1, ferner umfassend ein axial beabstandetes Paar Dichtungsringe (118), die eine Dämpferfluidkammer (120) abdichten, die zwischen dem Kurzschlusskäfig und der Dämpferhülse definiert sind.

4. Lagerstützanordnung nach Anspruch 3, wobei die Dämpferhülse einen ausgesparten Kanal (122) beinhaltet, der einen Teil der Dämpferfluidkammer ausbildet, die dazu konfiguriert ist, einen Fluidspeicher innerhalb der Dämpferfluidkammer bereitzustellen.

5. Lagerstützanordnung nach Anspruch 4, wobei der Kurzschlusskäfig einen Schritt (130) angrenzend an jeden Dichtungsring definiert, um eine Mindestölfilmdicke unter ungünstigen Bedingungen, unter welchen der Kurzschlusskäfig und die Dämpferhülse in Kontakt kommen, sicherzustellen.

6. Lagerstützanordnung nach Anspruch 1, wobei die radiale Federkomponente eine ringförmige Wellenfeder mit einer Vielzahl von radial äußeren Anschlussflächen (126) zum Drücken nach außen und eine Vielzahl von radial inneren Anschlussflächen (128) zum Drücken nach innen ist, wobei sich die inneren Anschlussflächen in Umfangsrichtung mit den äußeren Anschlussflächen abwechseln.

7. Lagerstützanordnung nach Anspruch 1, wobei der Kurzschlusskäfig eine Federkonstante, die kleiner als jene der radialen Federkomponente ist, zur Anwendung des ersten Niveaus radialer Steifigkeitsstütze vor dem zweiten Niveau radialer Steifigkeitsstütze aufweist.

8. Lagerstützanordnung nach Anspruch 1, wobei die radiale Federkomponente eine Wellenfeder ist und die Wellenfeder einer der Folgenden ist: ein kompletter Wellenring, ein gespaltener Wellenring und ein in Umfangsrichtung segmentierter Wellenring.

9. Lagerstützanordnung nach Anspruch 1, umfassend: eine Einhausung (102) und ein Lager (114), das in dem Lagersitz des Kurzschlusskäfigs sitzt.

## Revendications

1. Ensemble de support de palier (100) comprenant :
une cage d'écureuil (104) définissant un axe longitudinal (A) et comportant une partie cylindrique (106) définissant un siège de palier (108), dans lequel la cage d'écureuil est conçue pour fournir un premier niveau de rigidité de support radial entre un boîtier et un palier (114) logé dans le siège de palier ;
un manchon amortisseur (116) couplé fonctionnellement à la partie cylindrique de la cage d'écureuil à travers un film fluide pour amortir le mouvement radial relatif entre le manchon amortisseur et la cage d'écureuil ; et
un composant de ressort radial (124) connecté fonctionnellement à un côté du manchon amortisseur radialement opposé à la partie cylindrique de la cage d'écureuil pour fournir un second niveau de rigidité de support radial.

2. Ensemble de support de palier selon la revendication 1, comprenant en outre un boîtier (102), dans lequel la cage d'écureuil est montée sur le boîtier avec le manchon amortisseur et le composant de ressort radial radialement entre le boîtier et la partie cylindrique de la cage d'écureuil, le composant de ressort radial étant positionné radialement entre le manchon amortisseur et le boîtier pour solliciter radialement le manchon amortisseur en l'écartant du boîtier pour fournir le second niveau de rigidité de support radial.

3. Ensemble de support de palier selon la revendication 1, comprenant en outre une paire axialement espacée de bagues d'étanchéité (118) scellant une chambre de fluide d'amortissement (120) définie entre la cage d'écureuil et le manchon amortisseur.

4. Ensemble de support de palier selon la revendication 3, dans lequel le manchon amortisseur comporte un canal évidé (122) qui fait partie de la chambre de fluide d'amortisseur conçue pour fournir un stockage de fluide à l'intérieur de la chambre de fluide d'amortisseur.

5. Ensemble de support de palier selon la revendication 4, dans lequel la cage d'écureuil définit une marche (130) adjacente à chaque bague d'étanchéité pour assurer une épaisseur minimale de film d'huile dans des conditions défavorables dans lesquelles la cage d'écureuil et le manchon amortisseur entrent en contact.

6. Ensemble de support de palier selon la revendication 1, dans lequel le composant de ressort radial est un ressort ondulé annulaire avec une pluralité de plages radialement extérieures (126) pour la pression vers l'extérieur, et une pluralité de plages radialement intérieures (128) pour la pression vers l'intérieur, dans lequel les plages intérieures alternent circonférentiellement avec les plages extérieures.

7. Ensemble de support de palier selon la revendication 1, dans lequel la cage d'écureuil a une constante de ressort inférieure à celle du composant de ressort radial pour appliquer le premier niveau de support de rigidité radiale avant le second niveau de support de rigidité radiale.

8. Ensemble de support de palier selon la revendication 1, dans lequel le composant de ressort radial est un ressort ondulé et le ressort ondulé est l'un parmi : un anneau ondulé complet, un anneau ondulé fendu et un anneau ondulé segmenté circonférentiellement.

9. Ensemble de support de palier selon la revendication 1, comprenant : un boîtier (102) et un palier (114) logé dans le siège de palier de la cage d'écureuil.
